# EUROPÄISCHE PATENTSCHRIFT

(11) **EP 2 148 774 B1**
(45) Veröffentlichungstag und Bekanntmachung des Hinweises auf die Patenterteilung: **20.03.2019**
(21) Anmeldenummer: 08749335.9
(22) Anmeldetag: 06.05.2008
(51) Int. Cl.: B29C 49/04, B29C 49/20, B29C 49/54, B29C 65/56, B60K 15/03, B29C 49/48

(54) **VERFAHREN ZUR HERSTELLUNG EINES BEHÄLTERS AUS THERMOPLASTISCHEM KUNSTSTOFF DURCH EXTRUSIONSBLASFORMEN SOWIE ANSCHLUSSELEMENT ZUR VERWENDUNG BEI EINEM SOLCHEN VERFAHREN**
METHOD FOR THE PRODUCTION OF A CONTAINER MADE OF THERMOPLASTIC PLASTIC BY EXTRUSION BLOW MOLDING AND CONNECTION ELEMENT FOR USE IN SUCH A METHOD
PROCÉDÉ DE FABRICATION D'UN RÉCIPIENT EN MATIÈRE SYNTHÉTIQUE THERMOPLASTIQUE PAR MOULAGE PAR EXTRUSION ET SOUFFLAGE ET ÉLÉMENT DE RACCORDEMENT DESTINÉ À ÊTRE UTILISÉ DANS UN TEL PROCÉDÉ

(30) Priorität: 25.05.2007 DE 102007024677
(43) Veröffentlichungstag der Anmeldung: 03.02.2010
(73) Patentinhaber: Kautex Textron GmbH & Co. KG, 53229 Bonn (DE)
(72) Erfinder: WOLTER, Gerd, 53693 Königswinter (DE)
(74) Vertreter: Richly & Ritschel Patentanwälte PartG mbB
(86) Internationale Anmeldenummer: PCT/EP2008/003608
(87) Internationale Veröffentlichungsnummer: WO 2008/145246

(56) Entgegenhaltungen:
- EP-A- 0 595 158
- EP-A- 1 211 196
- EP-A- 1 894 702
- WO-A1-2006/008308
- DE-A1- 3 042 926
- DE-A1- 10 214 900
- DE-A1- 10 237 187
- FR-A1- 2 397 788
- JP-A- H0 270 421
- JP-A- H02 113 919
- JP-A- H06 285 963
- JP-A- S51 145 569
- JP-B2- 2 787 701
- US-A- 3 458 618
- US-A- 3 898 029
- US-A- 3 917 109
- US-A- 4 719 072
- US-A- 4 952 347
- US-A- 5 103 865
- US-A- 5 514 323

## Beschreibung

Die Erfindung betrifft ein Verfahren zur Herstellung eines Behälters aus thermoplastischem Kunststoff durch Extrusionsblasformen sowie ein Anschlusselement zur Verwendung bei einem solchen Verfahren.

Die Erfindung betrifft insbesondere ein Verfahren zur Herstellung eines Kraftstoffbehälters aus thermoplastischem Kunststoff sowie ein Anschlusselement für einen solchen Kraftstoffbehälter.

Kraftstoffbehälter aus thermoplastischem Kunststoff sollen grundsätzlich für Kohlenwasserstoffe undurchlässig sein. Diese werden üblicherweise aus mehrschichtigen Coextrudaten hergestellt, die Barriereschichten für Kohlenwasserstoffe enthalten. Die für die Herstellung von Kunststoff-Kraftstoffbehältern verwendeten Kunststoffe, beispielsweise Polyethylen, sind grundsätzlich nicht diffusionsdicht für Kohlenwasserstoffe. Diese Kunststoffe neigen darüber hinaus zum Quellen in Gegenwart von Kraftstoff. Aus diesem Grund sind die bekannten Kraftstoffbehälter aus Kunststoff mit einer mehrschichtigen Wandung versehen, in die eine EVOH-Schicht als Barriere für Kohlenwasserstoffe eingebettet ist. Insoweit stellt die mangelnde Diffusionsdichtigkeit des verwendeten Grundmaterials kein Problem dar.

Üblicherweise werden Kraftstoffbehälter jedoch mit Einbauten versehen, diese weisen Be- und Entlüftungsleitungen sowie elektrische Anschlüsse auf. Zum Herstellen von Hindurchführungen durch die Tankwandung ist es bekannt, den fertigen Behälter mit Auskreisungen zu versehen, in die Anschlussmittel, Ventile oder dergleichen, eingesetzt werden. Die Ventile, Ventilabdeckungen und Nippel werden mit der Außenwandung des Behälters die jeweilige Öffnung abdeckend verschweißt. Solche Verbindungsstellen an einem Kraftstoffbehälter stellen potentielle Leckagestellen dar. Unter Leckage ist nicht der Flüssigkeitsverlust im eigentlichen Sinne zu verstehen, vielmehr sind hiermit Diffusionsleckagen bzw. Diffusionsverluste im Bereich von Nahtstellen und/oder Verschweißungen ohne zusätzliche Barrieremaßnahmen gemeint. Um Leckagepfade an Anschlüssen des Kraftstoffbehälters zu vermeiden, ist es bekannt, Anschlussmittel und Ventile als aufwendige Zwei-Komponenten-Bauteile herzustellen, wobei in der Regel diese Bauteile wenigstens ein Teil aus einem mit der Tankwandung verschweißbaren Kunststoff aufweisen, Funktionsteile an solchen Elementen hingegen regelmäßig aus Kunststoffen bestehen, die in Anwesenheit von Kraftstoff nicht quellen. Diese Kunststoffe sind meistens nicht mit den für die Tankwandung verwendeten Kunststoffen verschweißbar.

Ein Verfahren zur Herstellung eines Kraftstoffbehälters aus thermoplastischem Kunststoff sowie ein solcher Kraftstoffbehälter mit Anschlusselementen für Schläuche oder dergleichen ist beispielsweise aus der EP 1 211 196 bekannt. Die EP 1 211 196 A1 beschreibt einen zweischaligen Kraftstoffbehälter aus thermoplastischem Kunststoff mit einer in die Behälterwandung eingebetteten Barriereschicht für Kohlenwasserstoffe, dessen zum Behälter zusammengefügte Schalen durch Thermoformen erhalten wurden. Um eine einfache Anbringung von Anschlusselementen unter Beibehaltung einer hohen Permeationsdichtigkeit für Kohlenwasserstoffe zu gewährleisten, wird in der EP 1 211 196 A1 ein zweiteiliges Anschlusselement bzw. ein zweiteiliger Fitting vorgeschlagen, der wenigstens ein Außenteil und ein Innenteil umfasst, wobei das Außenteil mit der Behälteraußenwandung verschweißt ist und das Innenteil das Außenteil unter Verdrängung und Zwischenlage der Behälterwandung zumindest teilweise durchsetzt. Diese Anordnung hat den Vorzug, dass die Behälterwandung so zwischen den Bauteilen eingeschlossen und verdrängt wird, dass das verdrängte Material als Abdichtung der Durchführung dient.

Eine solche Hindurchführung durch die Behälterwandung ist beim Thermoformen der Halbschalen des Behälters verhältnismäßig einfach herstellbar, schwieriger hingegen ist eine solche Verbindung bei der Herstellung eines Kraftstoffbehälters durch Extrusionsblasformen zu realisieren.

Aus der DE 102 37 187 A1 ist ein Verfahren zur Herstellung eines Kraftstoffbehälters durch Extrusionsblasformen bekannt, wobei der Behälter mit einem diesen außen umgebenden stabilisierendem Netz versehen wird. Zur Befestigung des Netzes sind Anschlussfittings vorgesehen, die als Einlegeteile in das Blasformwerkzeug eingelegt werden. Die Anschlussfittings durchstoßen die Behälterwandung bei der Herstellung desselben und klemmen sie - noch in heißem Zustand - mittels einer innerhalb des Behälters angeordneten Kontermutter oder eines Konterrings und einer an dem Anschlussfitting integrierten Rosette auf der anderen Seite zwischen sich ein. Der Erfindung liegt daher die Aufgabe zu Grunde, ein Verfahren zur Herstellung eines Behälters, insbesondere eines Kraftstoffbehälters aus thermoplastischem Kunststoff bereitzustellen, mit welchem es möglich ist, Anschlusselemente während der Herstellung des Behälters mit möglichst einfachen Mitteln an diesem vorzusehen. Dabei sollten möglichst Leckagepfade für Kohlenwasserstoffe in der Wandung des Behälters vermieden werden bzw. auf ein Minimum beschränkt werden.

Die der Erfindung zugrunde liegende Aufgabe wird gelöst durch die Merkmale der Ansprüche 1 und 3, vorteilhafte Ausgestaltungen der Erfindung ergeben sich aus den Unteransprüchen.

Die Durchdringungsspitze und die Matrize können dabei so ausgebildet sein, dass die Wandung des Behälters in dem betreffenden Bereich der Durchdringung so geöffnet wird, dass im Wesentlichen keine oder eine nur sehr geringfügige Austulpung der Behälterwandung erzeugt wird. Wenn der Durchmesser der Matrize nur unwesentlich größer als derjenige der Durchdringungsspitze des Anschlusselements ist, wird die von dem Anschlusselement durchsetze Öffnung in der Wandung des Behälters im Wesentlichen ausgestanzt werden. Wenn das Anschlusselement an seinem durch die Wandung des Behälters hindurchzuführenden Ende eine bestimmte Gestaltung zur Aufnahme von Anschlussbauteilen wie Rohren oder Schläuchen aufweist, ist auf diese Art und Weise sichergestellt, dass das Durchdringungsende des Anschlusselements frei aus der Wandung des Behälters hervorsteht. Es ist für den Fachmann selbstverständlich, dass hierfür gegebenenfalls bei oder nach der Entnahme des Behälters aus dem Werkzeug geringfügig Nachbearbeitung erforderlich sein kann.

Bei dem offenbarten Verfahren wird das Anschlusselement als verlorener Formstempel verwendet, der die Wandung des Behälters von einer Seite her durchstößt. Das Anschlusselement selbst wird dabei als Mittel zum Durchstoßen der Behälterwandung verwendet und verbleibt als verlorener Formstempel in der Behälterwandung. Das Werkzeug dient dabei als Matrize oder Aufnahme beziehungsweise als Widerlager für den durch die Wandung des Kraftstoffbehälters zu drückenden Teil des Anschlusselementes. "Durchstoßen der Behälterwandung" im Sinne der Offenbarung soll so zu verstehen sein, dass das Material im Umfangsbereich der so hergestellten Öffnung in der Wandung des Behälters eine möglichst geringe Umformung im Sinne einer Austulpung erfahren soll.

Das Verfahren gemäß der Erfindung umfasst zweckmäßigerweise die Extrusion zweier bahnförmiger Vorformlinge, von denen jede Bahn eine Behälterschale bildet. Die Bahnen werden in einem dreiteiligen Formwerkzeug bestehend aus Außenformen und einer Mittenform umgeformt, wobei die Mittenform verfahrbare oder verschiebbare Bauteilhalter aufweist, mittels welcher beim Ausformen der Behälterwandung Bauteile an dessen Innenwandung platziert werden können. Erfindungsgemäß ist vorgesehen, dass das Anschlusselement auf diese Art und Weise von innen nach außen durch die Behälterwand durchgestoßen wird.

Vorzugsweise wird das Anschlusselement bei der Durchdringung der Behälterwandung in eine im Werkzeug vorgesehene Matrize eingeschoben, die auf der dem Anschlusselement abgekehrten Seite der Behälterwandung angeordnet wird. Eine solche Matrize kann in einfacher Art und Weise durch eine Ausnehmung im Werkzeug gebildet werden. Alternativ zu einer solchen Ausnehmung im Werkzeug kann in das Werkzeug ein Einlegeteil eingebracht worden sein, dass nach Fertigstellung des Behälters an der Behälterwandung verbleibt.

Erfindungsgemäß wird als Anschlusselement ein Nippel verwendet, der mit einem umlaufenden Flansch zur Verschweißung mit der Behälterwandung versehen ist. Eine Verschweißung mit der Behälterwandung findet auf der der Behälterwandung zugekehrten Seite des umlaufenden Flansches statt. Darüber hinaus findet eine Verschweißung mit demjenigen Teil des Umfangs des Anschlusselementes statt, der die Behälterwandung durchsetzt.

Alternativ können das Anschlusselement und ein beispielsweise behälterinnenseitig vorzusehendes Funktionsbauteil einstückig miteinander verbunden sein, so dass beispielsweise das Anschlusselement ein Teil zur Durchdringung der Behälterwandung mit einem angeformten flanschartigen Kragen aufweist, andererseits einstückig beispielsweise ein Ventilgehäuse, einen Ausperlbehälter oder irgendein anderes Kunststoffbauteil aufnimmt.

Als Durchdringungsspitze kann beispielsweise ein hülsenförmiges Schneidelement Anwendung finden, dass mittels einer Rast- oder Schnappverbindung abnehmbar auf ein komplementäres Rastprofil des Anschlusselementes aufgesetzt wird. Die auf das Anschlusselement aufgesetzte abnehmbare Durchdringungsspitze schützt das Anschlusselement davor, von dem verdrängten Kunststoff verstopft oder verklebt zu werden. Insbesondere wenn das Anschlusselement von innen nach außen die Behälterwandung durchstößt, kann die Durchdringungsspitze nach Fertigstellung des Behälters einfach abgenommen werden.

Es kann beispielsweise vorgesehen sein, dass das Schneidelement mehrfach verwendet wird.

Bei einer zweckmäßigen Variante des Verfahrens gemäß der Offenbarung ist vorgesehen, dass das Anschlusselement vor dem Schritt des Durchstoßens der Behälterwandung zumindest in Teilbereichen vorgewärmt wird. Beispielsweise kann eine Vorwärmung oder Voraufheizung des flanschartigen Kragens vorgesehen sein, um die stoffflüssige Verbindung des Anschlusselements mit der Behälterwandung in diesem Bereich zu verbessern.

Die der Erfindung zu Grunde liegende Aufgabe wird weiterhin gelöst durch ein Anschlusselement gemäß Anspruch 3 zur Verwendung bei einem Verfahren nach einem der Ansprüche 1 bis 2, welches sich dadurch auszeichnet, dass es als rohrförmiges Durchdringungselement mit einem umlaufenden Kragen zur Verschweißung mit der Behälterwandung ausgebildet ist, wobei ein Teil des Anschlusselements mit einer umlaufenden Schneidkante versehen ist. Das Anschlusselement ist zweiteilig ausgebildet, wobei ein Teil des Anschlusselements als abnehmbares Schneidelement ausgebildet ist.

Ein solches Schneidelement wird hülsenförmig ausgebildet, wobei dieses zweckmäßigerweise die zum Durchstoßen der Wandung vorgesehene Einschubseite des Anschlusselements umschließt.

Wenn das: Anschlusselement beispielsweise als herkömmlicher Nippel mit zum Aufwürgen von Schläuchen oder Leitungen versehenen Enden ausgebildet ist, die üblicherweise ein sogenanntes Tannenbaumprofil aufweisen, ist es besonders vorteilhaft, wenn das Schneidelement den betreffenden profilierten Zapfen des Anschlusselements beziehungsweise des Nippels so umschließt, dass das Anschlussprofil desselben nicht anschmiltz oder mit thermoplastischem Material verklebt wird.

Zweckmäßigerweise ist das Schneidelement mit dem Anschlusselement verrastet.

Bei einer Variante des Anschlusselements ist dieses als Nippel mit wenigstens einem äußeren Halteprofil ausgebildet, wobei das Halteprofil formschlüssig mit dem Schneidelement zusammenwirkt. Das Halteprofil kann hierzu beispielsweise eine umlaufende Rastvertiefung aufweisen, die mit einem oder mehreren Rasthaken oder Rastvorsprüngen des Schneidelements zusammenwirkt.

Das Schneidelement ist zweckmäßigerweise als etwa zylindrische Hülse mit einer in Einbaulage führenden, umlaufenden Schneidkante ausgebildet. Die Schneidkante ist zweckmäßigerweise wellenlinienförmig ausgebildet, so dass das Schneidelement an seinem führenden Ende als Schneidkrone aüsgebildet ist.

Bei einer vorteilhaften Variante des erfindungsgemäßen Anschlusselements weist das Schneidelement in Längsrichtung wenigstens eine innere Unterteilung auf, durch welche wenigstens eine in Schneidrichtung vordere und eine in Schneidrichtung hintere Schmelzekammer gebildet werden. Das beim Durchstoßen der Wandung verdrängte, plastifizierte thermoplastische Material wird zunächst in der vorderen Schmelzekammer gefangen. Ggf. wird das Material auch die in Schneidrichtung hintere Schmelzenkammer verdrängt. Hierzu ist zweckmäßigerweise vorgesehen, dass die Schmelzekammern über wenigstens einen Schmelzekanal mit einander kommunizieren.

Vorteilhafte Ausgestaltungen der Erfindung werden nachstehend anhand eines in der Zeichnung dargestellten Ausführungsbeispiels erläutert.

Es zeigen:
- Figur 1:: eine schematische Ansicht einer ersten Variante eines auf einen Bauteilhalter aufgesteckten Anschlusselements vor dessen Durchstoßung der Behälterwandung,
- Figur 2:: veranschaulicht das Durchstoßen der Behälterwandung mittels des Anschlusselements gemäß der Erfindung und
- Figur 3:: zeigt schematisch das in der Behälterwandung verbleibende Anschlusselement sowie den Vorgang des Abnehmens des Schneidelements und
- Figur 4:: eine zweite Variante eines Anschlusselements.

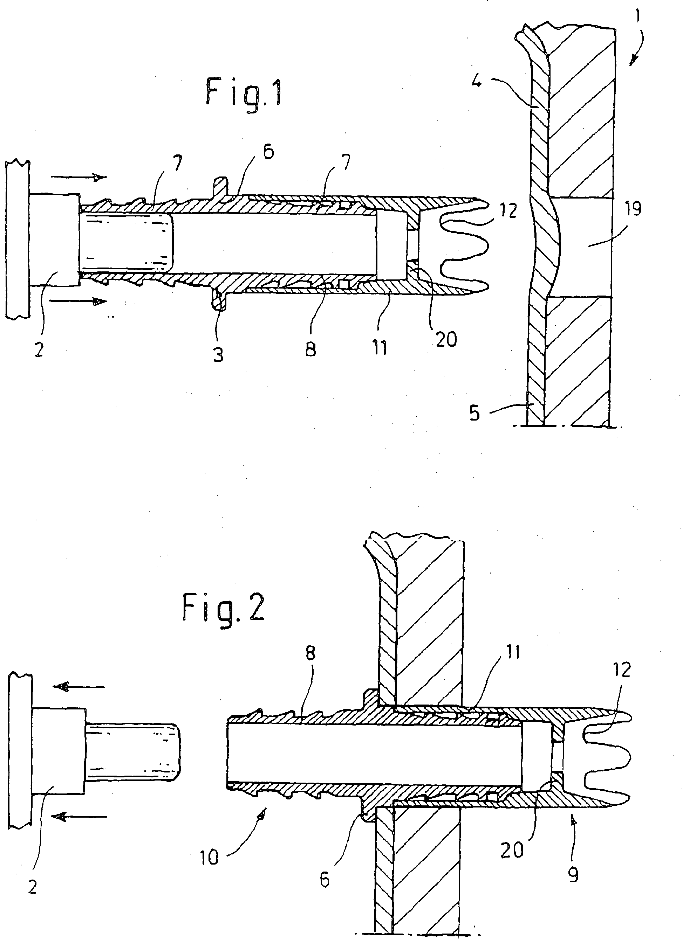

In Figur 1 ist nur ein Teil einer Wand eines Blasformwerkzeugs 1 schematisch dargestellt. Das vollständige Blaswerkzeug sowie die zugehörigen Extruder sowie Entnahmevorrichtungen und dergleichen sind aus Gründen der Einfachheit nicht dargestellt.

Das Blasformwerkzeug, welches zur Herstellung des Behälters gemäß der Erfindung vorgesehen ist, umfasst zwei Außenformen und eine Mittenform, wobei die einzelnen Teile des Blaswerkzeugs in üblicher Weise auf Formaufspannplatten montiert sind, die innerhalb eines Schließgestells verfahrbar sind. Die Außenformen sind voneinander weg und aufeinander zu im Sinne einer Öffnungs- und Schließbewegung des Blaswerkzeugs verfahrbar. Die Mittenform ist quer zur Öffnungs- und Schließbewegung der Außenformen verfahrbar. Die Mittenform umfasst pneumatisch verstellbare beziehungsweise verschiebbare Bauteilhalter, mit welchen Einbauten in dem herzustellenden Behälter platzierbar sind. Der Behälter ist als mehrschichtig extrudierter Kraftstoffbehälter aus thermoplastischem Kunststoff ausgebildet.

Das Verfahren umfasst das Ausstoßen bahnförmiger Vorformlinge aus Extrusionsköpfen, wobei die Vorformlinge jeweils zwischen den Außenformen und der Mittenform abgelängt werden. Die Außenformen werden bezüglich der Mittenform geschlossen. Die Vorformlinge werden mittels Gasdruckbeaufschlagung und/oder mittels außen angelegten Vakuums in die von den Außenformen gebildeten Teilkavitäten des Werkzeugs eingezogen oder eingedrückt. In einem weiteren Schritt wird beispielsweise das auf dem Bauteilhalter 2 platzierte Anschlusselement 3 in Richtung auf eine Außenform (Blasformwerkzeug 1) verfahren, so dass das Anschlusselement 3 die Wandung 4 des Vorformlings 5 durchstößt. Sodann wird beispielsweise der in Figur 2 dargestellte Bauteilhalter 2 in die nicht dargestellte Mittenform eingezogen. Die Außenformen werden auseinandergefahren, die Mittenform wird quer zur Öffnungs- und Schließbewegung zwischen den Außenformen verfahren, so dass die Außenformen sich wieder schließen können und die unterdessen jeweils Halbschalen bildenden Vorformlinge zu einem geschlossenen Behälter zusammenfügen können.

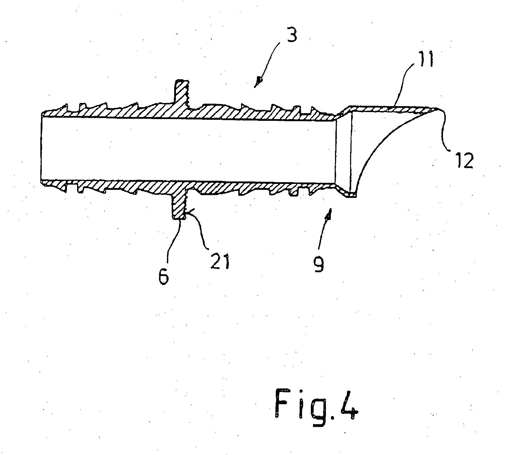

Wie eingangs bereits erwähnt, kann das Anschlusselement 3 als Anschlussnippel ausgebildet sein, der beiderseits eines umlaufenden Kragens 6 jeweils einen mit einem Tannenbaumprofil 7 versehenen Zapfen 8 ausbildet. In Bezug auf die Wandung 4 des Vorformlings besitzt das Anschlusselement 3 ein in Einschubrichtung führendes Ende 9 und ein in Einschubrichtung hinteres Ende 10. Bei der in den Figuren 1 bis 3 gezeigten Variante des Anschlusselements 3 ist auf das führende Ende 9 ein hohles, hülsenförmiges Schneidelement 11 aufgesteckt, das eine vordere umlaufende Schneidkante 12 aufweist. Die Schneidkante 12 ist wellenlinienförmig ausgebildet und besitzt ein kronenförmiges Profil, wodurch das Durchstoßen der Wandung 4 des Vorformlings 5 vereinfacht wird. Die Schneidkante 12 muss nicht notwendigerweise wellenlinienförmig ausgebildet sein, vielmehr kann diese auch die Kontur des in Figur 4 dargestellten Schneidelementes aufweisen. An dem der Schneidkante 12 abliegenden Ende des Schneidelements 11 ist dieses mit nach innen vorstehenden, federnd ausgebildeten Rastvorsprüngen 13 versehen, die in eine umlaufende Rastvertiefung 14 am Umfang des Zapfens 8 des Anschlusselements einschnappen. Die Rastvorsprünge 13 können jeweils an Rastfedern des Schneidelements vorgesehen sein, die beispielsweise durch entsprechend ausgebildete Längsschlitze desselben gebildet werden können.

An dem Zapfen 8 des Anschlusselements 3 an seinem führenden Ende 9 ist zudem ein umlaufender Anschlag 15 für das Schneidelement 11 vorgesehen.

Das Schneidelement bildet im Bereich der umlaufenden Schneidkante 12 eine erste, in Einschubrichtung führende Schmelzekammer 16 aus. In Einschubrichtung dahinter liegend ist eine zweite Schmelzekammer 17 vorgesehen. Die Schmelzekammern 16, 17 sind untereinander durch einen Schmelzekanal 18 verbunden.

In der Wandung des Blasformwerkzeugs 1 ist eine Ausnehmung 19 vorgesehen, die eine Matrize bildet, die in ihrem Durchmesser dem Durchmesser des Schneidelements 11 entspricht. Wie dies aus der Zusammenschau der Figuren 1 bis 3 ersichtlich ist, wird das auf den Bauteilhalter 2 aufgesteckte Anschlusselement 3 mittels des Bauteilhalters 2 in die Wandung 4 des Vorformlings 5 hineingedrückt, wobei das dabei von dem Schneidelement 11 durchdrungene und verdrängte plastische Material in die Ausnehmung 19 hineingedrückt wird. Teilweise fließt das Material in die erste 16 und ggf. durch den Schmelzekanal 18 in die zweite Schmelzekammer 17.

Figur 2 zeigt den zurückgezogenen Bauteilhalter und das vollständig die Wandung 4 des Vorformlings 5 durchdringende Anschlusselement, wobei der umlaufende Kragen 6 des Anschlusselements 3 vollflächig auf der Wandung 4 anliegt und mit der noch plastischen Wandung des Vorformlings 5 verschweißt.

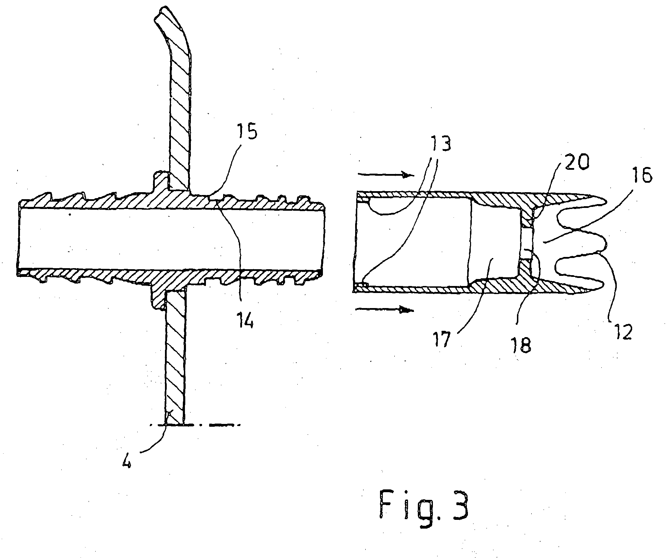

Nach Fertigstellung des Artikels in der Blasform kann das Schneidelement 11, wie dies in Figur 3 veranschaulicht ist, von dem nach außen vorstehenden Zapfen 8 des Anschlusselements 3 entfernt werden.

Das Anschlusselement 3 in dem zuvor beschriebenen Ausführungsbeispiel ist symmetrisch als Nippel beziehungsweise Doppelnippel ausgebildet, wobei beiderseits des umlaufenden Kragens 6 jeweils ein Zapfen 8 mit Tannenbaumprofil 7 vorgesehen sind, beide Zapfen etwa gleiche Länge aufweisen und die Profilierung 8 der Zapfen identisch ist, so dass das Schneidelement 11 auf jede Seite des Anschlusselements 3 aufgesteckt werden kann.

Zur Bildung der Schmelzekammern 16, 17 ist das Schneidelement 11 mit einer inneren Unterteilung 20 versehen, die durch den Schmelzekanal 18 durchsetzt ist. Anstelle eines Schmelzekanals 18 können auch mehrere Schmelzekanäle vorgesehen sein.
Bei der in Figur 4 dargestellten Variante des Anschlusselements 3 ist dieses an seinem führenden Ende 9 mit einem Schneidelement 11 versehen, dass nicht als abnehmbare Hülse, sondern als integraler Bestandteil des Anschlusselements 3 ausgebildet ist. Das führende Ende 9 des Anschlusselements ist muffenartig aufgeweitet und mit einer umlaufenden Schneidkante 12 versehen, die in der in Figur 4 dargestellten Schnittansicht kreisbogenförmig gekrümmt ist. Diese besondere Geometrie der Schneidkante ermöglicht eine Durchdringung beziehungsweise Stanzung der Wandung des Behälters mit verhältnismäßig geringem Eindringwiderstand, um eine übermäßige Austulpung der Wandung 4 des Behälters zu verhindern. Das Schneidelement kann bedarfsweise nach Fertigstellung des Behälters in einem Nachbearbeitungsschritt abgetrennt werden.

Um die Verschweißbarkeit des Kragens 6 beziehungsweise des umlaufenden Flansches des Anschlusselements 3 mit der Wandung 4 des Behälters zu verbessern, ist bei der in Figur 4 gezeigten Variante des Anschlusselements 3 auf der der Wandung 4 zugekehrten Fläche 21 des Kragens 6 eine Profilierung vorgesehen. Durch die sägezahnähnliche Struktur der Fläche 21 wird die Wärmekapazität des Kunststoffs bereichsweise herabgesetzt, so dass eine leichte Verschweißbarkeit mit der Wandung 4 des Behälters gewährleistet ist.

### Bezugszeichenliste:

1) Blasformwerkzeug
2) Bauteilhalter
3) Anschlusselement
4) Wandung
5) Vorformling
6) Kragen
7) Tannenbaumprofil
8) Zapfen
9) führendes Ende
10) hinteres Ende
11) Schneidelement
12) Schneidkante
13) Rastvorsprünge
14) Rastvertiefung
15) Anschlag
16) erste Schmelzekammer
17) zweite Schmelzekammer
18) Schmelzekanal
19) Ausnehmung
20) Unterteilung
21) Fläche

## Patentansprüche

1. Verfahren zur Herstellung eines Behälters aus thermoplastischem Kunststoff durch Extrusionsblasformen, wobei der Behälter während dessen Ausformung innerhalb eines mehrteiligen Werkzeugs (1) mit wenigstens einem dessen Wandung durchsetzenden Anschlusselement (3) versehen wird, wobei die Wandung (4) des Behälters in noch plastifiziertem Zustand mit einem Teil des Anschlusselements durchstoßen wird derart, dass das Anschlusselement wenigstens in Teilbereichen mit der Behälterwandung eine stoffflüssige Verbindung eingeht, wobei das Anschlusselement mit einer Durchdringungsspitze versehen ist und das Anschlusselement bei der Durchdringung der Behälterwandung in eine im Werkzeug vorgesehene Matrize (19) eingeschoben wird, die auf der dem Anschlusselement abgekehrten Seite der Behälterwandung angeordnet wird oder angeordnet ist, wobei als Anschlusselement ein Nippel verwendet wird, der mit einem umlaufenden Flansch (6) zur Verschweißung mit der Behälterwandung versehen ist, und als Durchdringungsspitze ein hülsenförmiges Schneidelement (11) Anwendung findet, dass abnehmbar auf das Anschlusselement aufgesetzt wird.

2. Verfahren nach Anspruch 1, wobei das Anschlusselement vor dem Schritt des Durchstoßens der Behälterwandung zumindest in Teilbereichen vorgewärmt wird.

3. Anschlusselement (3) zur Verwendung bei einem Verfahren nach einem der Ansprüche 1 bis 2, **dadurch gekennzeichnet, dass** es als rohrförmiges Durchdringungselement mit einem umlaufenden Kragen (6) zur Verschweißung mit der Behälterwandung ausgebildet ist und dass ein Teil des Anschlusselements mit einer umlaufenden Schneidkante (12) versehen ist, wobei das Anschlusselement (3) zweiteilig ausgebildet ist, wobei ein Teil des Anschlusselements als abnehmbares Schneidelement (11) ausgebildet ist, und das Schneidelement (11) hülsenförmig ausgebildet ist, und die zum Durchstoßen der Wandung vorgesehene Einschubseite des Anschlusselements (3) umschließt.

4. Anschlusselement nach Anspruch 3, **dadurch gekennzeichnet, dass** die umlaufende Schneidkante (12) in einer Längsmittelebene des Anschlusselements (3) gekrümmt verläuft.

5. Anschlusselement nach Anspruch 3, **dadurch gekennzeichnet, dass** das Schneidelement (11) mit dem Anschlusselement (3) verrastet ist.

6. Anschlusselement nach einem der Ansprüche 3 bis 5, **dadurch gekennzeichnet, dass** dieses als Nippel mit wenigstens einem äußeren Halteprofil (7) ausgebildet ist, wobei das Halteprofil (7) formschlüssig mit dem Schneidelement (11) zusammenwirkt.

7. Anschlusselement nach einem der Ansprüche 3 bis 6, **dadurch gekennzeichnet, dass** das Schneidelement (11) als etwa zylindrische Hülse mit einer in Einbaulage führenden, umlaufenden Schneidkante (12) ausgebildet ist.

8. Anschlusselement nach Anspruch 7, **dadurch gekennzeichnet, dass** die Schneidkante (12) wellenlinienförmig ausgebildet ist.

9. Anschlusselement nach einem der Ansprüche 3 bis 8, **dadurch gekennzeichnet, dass** das Schneidelement (11) in Längsrichtung wenigstens eine Unterteilung (20) aufweist, durch welche wenigstens eine in Schneidrichtung vordere und hintere Schmelzekammer (16), (17) gebildet wird.

10. Anschlusselement nach Anspruch 9, **dadurch gekennzeichnet, dass** die Schmelzekammern (16), (17) wenigstens über einen Schmelzkanal (18) miteinander kommunizieren.

11. Anschlusselement nach einem der Ansprüche 1 bis 10, **dadurch gekennzeichnet, dass** das Anschlusselement einstückig an ein Funktionsbauteil angeformt ist.

## Claims

1. A method for the production of a container from thermoplastic synthetic material by extrusion blow molding, wherein the container is provided during its molding within a multi-part tool (1) with at least one connection element (3) penetrating the wall thereof, wherein the wall (4) of the container in the still plasticized state is penetrated by a part of the connection element in such a way that the connection element at least in partial regions enters into an integral connection with the container wall, wherein the connection element is provided with a penetration tip and the connection element is pushed into a matrix (19) provided in the tool when the container wall is penetrated, which matrix is or is being arranged on the side of the container wall facing away from the connection element, wherein a nipple is used as connection element, which is provided with a circumferential flange (6) for welding to the container wall, and as a penetration tip a sleeve-shaped cutting element (11) is used, which is detachably attached to on the connection element.

2. Method according to claim 1, wherein the connection element is preheated before the step of penetrating the container wall at least in partial regions.

3. Connection element (3) for use in a method according to one of claims 1 to 2, **characterized in that** it is constructed as a tubular penetration element with a circumferential collar (6) for welding to the container wall and that part of the connection element is provided with a circumferential cutting edge (12), wherein the connection element (3) is formed in two parts, wherein one part of the connection element is formed as a detachable cutting element (11), and the cutting element (11) is constructed in a sleeve-shape form, and encloses the insertion side of the connection element (3) provided for piercing through the wall.

4. Connection element according to claim 3, **characterized in that** the circumferential cutting edge (12) extends curved in a longitudinal center plane of the connection element (3).

5. Connection element according to claim 3, **characterized in that** the cutting element (11) is latched to the connection element (3).

6. Connection element according to one of claims 3 to 5, **characterized in that** it is formed as a nipple with at least one outer retaining profile (7), wherein the retaining profile (7) interacts in a form-fitting manner with the cutting element (11).

7. Connection element according to one of claims 3 to 6, **characterized in that** the cutting element (11) is formed as an approximately cylindrical sleeve with an in the installation position leading, circumferential cutting edge (12).

8. Connection element according to claim 7, **characterized in that** the cutting edge (12) is formed in a wavy line shape.

9. Connection element according to one of claims 3 to 8, **characterized in that** the cutting element (11) has at least one subdivision (20) in the longitudinal direction, by which at least one melting chamber (16), (17) front and rear in the cutting direction is formed.

10. Connection element according to claim 9, **characterized in that** the melting chambers (16), (17) communicate with one another at least via one melting channel (18).

11. Connection element according to one of claims 1 to 10, **characterized in that** the connection element is molded in single-piece to a functional component.

## Revendications

1. Procédé destiné à fabriquer un récipient à partir d'une matière synthétique thermoplastique par extrusion-soufflage, dans lequel le récipient est pourvu, pendant son façonnage à l'intérieur d'un outil (1) en plusieurs parties, d'au moins un élément de raccordement (3) traversant sa paroi, dans lequel la paroi (4) du récipient, dans l'état encore plastifié, est transpercée par une partie de l'élément de raccordement de telle manière que l'élément de raccordement établit au moins dans des zones partielles une liaison par liaison de matière avec la paroi de récipient, dans lequel l'élément de raccordement est pourvu d'une pointe de pénétration et l'élément de raccordement est glissé, lors de la pénétration de la paroi de récipient, dans une matrice (19) prévue dans l'outil, qui est disposée ou soit disposée sur le côté, opposé à l'élément de raccordement, de la paroi de récipient, dans lequel est utilisé, en tant qu'élément de raccordement, un embout, qui est pourvu d'une bride (6) périphérique destinée au soudage avec la paroi de récipient, et un élément de découpage (11) en forme de douille trouve application en tant que pointe de pénétration, qui est placé sur l'élément de raccordement de manière à pouvoir amovible.

2. Procédé selon la revendication 1, dans lequel
l'élément de raccordement est préchauffé au moins dans des zones partielles avant l'étape du transpercement de la paroi de récipient.

3. Elément de raccordement (3) destiné à être utilisé lors d'un procédé selon l'une quelconque des revendications 1 à 2, **caractérisé en ce qu'**il est réalisé sous la forme d'un élément de pénétration de forme tubulaire avec un rebord (6) périphérique destiné au soudage à la paroi de récipient, et qu'une partie de l'élément de raccordement est pourvue d'une arête de découpage (12) périphérique, dans lequel l'élément de raccordement (3) est réalisé en deux parties, une partie de l'élément de raccordement est réalisée sous la forme d'un élément de découpage (11) pouvant être retiré,
et l'élément de découpage (11) est réalisé de manière à présenter une forme de douille et renferme le côté d'insertion par glissement, prévu pour transpercer la paroi, de l'élément de raccordement (3).

4. Elément de raccordement selon la revendication 3, **caractérisé en ce que** l'arête de découpage (12) périphérique s'étend de manière incurvée dans un plan médian longitudinal de l'élément de raccordement (3).

5. Elément de raccordement selon la revendication 3, **caractérisé en ce que** l'élément de découpage (11) est enclenché avec l'élément de raccordement (3).

6. Elément de raccordement selon l'une quelconque des revendications 3 à 5, **caractérisé en ce que** celui-ci est réalisé sous la forme d'un raccord fileté avec au moins un profil de maintien (7) extérieur, dans lequel le profil de maintien (7) coopère par complémentarité de forme avec l'élément de découpage (11).

7. Elément de raccordement selon l'une quelconque des revendications 3 à 6, **caractérisé en ce que** l'élément de découpage (11) est réalisé sous la forme d'une douille à peu près cylindrique avec une arête de découpage (12) périphérique conduisant à une position de montage.

8. Elément de raccordement selon la revendication 7, **caractérisé en ce que** l'arête de découpage (12) est réalisée de manière à présenter une forme linéaire ondulée.

9. Elément de raccordement selon l'une quelconque des revendications 3 à 8, **caractérisé en ce que** l'élément de découpage (11) présente dans la direction longitudinale au moins une subdivision (20), par laquelle au moins une chambre de matière fondue avant et une chambre de matière fondue arrière (16), (17) dans le sens de découpage sont formées.

10. Elément de raccordement selon la revendication 9, **caractérisé en ce que** les chambres de matière fondue (16), (17) communiquent entre elles au moins par l'intermédiaire d'un canal de matière fondue (18).

11. Elément de raccordement selon l'une quelconque des revendications 1 à 10, **caractérisé en ce que** l'élément de raccordement est moulé d'un seul tenant sur un composant fonctionnel.
